# EUROPÄISCHE PATENTSCHRIFT

(11) **EP 3 443 148 B1**
(45) Veröffentlichungstag und Bekanntmachung des Hinweises auf die Patenterteilung: **13.05.2020**
(21) Anmeldenummer: 17717187.3
(22) Anmeldetag: 13.04.2017
(51) Int. Cl.: C25D 13/22, C09D 5/44, C23C 22/83

(54) **FÖRDERGESTELLBEHANDLUNG ZUR UNTERDRÜCKUNG ANLAGENBEDINGTER PHOSPHATÜBERSCHLEPPUNG IN EINER PROZESSFOLGE ZUR TAUCHLACKIERUNG**
CONVEYOR FRAME TREATMENT FOR SUPPRESSING PHOSPHATE DRAGGING RESULTING FROM THE PLANT DESIGN IN A DIP COATING PROCESS SEQUENCE
TRAITEMENT DE STRUCTURE DE TRANSPORT POUR SUPPRIMER LE TRANSFERT DE PHOSPHATES, LIÉ À L'ÉQUIPEMENT, DANS UNE SÉQUENCE DE TRAITEMENT DE LAQUAGE PAR IMMERSION

(30) Priorität: 15.04.2016 DE 102016206417
(43) Veröffentlichungstag der Anmeldung: 20.02.2019
(73) Patentinhaber: Henkel AG & Co. KGaA, 40589 Düsseldorf (DE)
(72) Erfinder: BROUWER, Jan-Willem, 47877 Willich (DE); PILAREK, Frank-Oliver, 50931 Köln (DE); RESANO ARTALEJO, Fernando Jose, 40597 Düsseldorf (DE)
(74) Vertreter: Stromberg, Christian
(86) Internationale Anmeldenummer: PCT/EP2017/058994
(87) Internationale Veröffentlichungsnummer: WO 2017/178618

(56) Entgegenhaltungen:
- EP-A1- 0 376 222
- WO-A1-98/56963
- WO-A1-2014/074234
- DE-A1- 2 850 977
- US-A- 4 746 416

## Beschreibung

Die vorliegende Erfindung betrifft ein Verfahren zur korrosionsschützenden Vorbehandlung einer Vielzahl von metallischen Bauteilen, bei dem die Überschleppung wasserlöslicher Phosphate aus einer sauren Passivierung, die Wasser gelöste Phosphate als Aktivkomponente aufweist und insbesondere eine Phosphatierung sein kann, in die Behandlungsstufe der Tauchlackierung effektiv vermieden wird. Im erfindungsgemäßen Verfahren wird ein Bauteil mittels Fördergestell durch sämtliche Behandlungsstufen der Vorbehandlungslinie geführt und das Transportpaar bestehend aus Bauteil und Fördergestell erst nach der Tauchlackierung und für die Übergabe des vorbehandelten Bauteils an die Einbrennstufe getrennt, und das Fördergestell damit für die erneute Aufnahme eines vorzubehandelnden Bauteils freigegeben. Das erfindungsgemäße Verfahren sieht nun vor, dass in einem eigenen Prozessschritt, der nur die Behandlung der Fördergestelle vorsieht, zumindest der Teil der Fördergestelle der zuvor in der sauren Passivierung mit der wässrigen Behandlungslösung enthaltend wasserlösliche Phosphate in Kontakt gebracht worden war, nunmehr zur Konditionierung mit einem sauren wässrigen Mittel enthaltend wasserlösliche Verbindungen der Elemente Eisen, Aluminium, Kalzium, Magnesium, Zink, Chrom(III), Titan und/oder Zirkonium in einer Gesamtmenge von mindestens 0,1 g/kg bezogen auf das Mittel in Kontakt gebracht wird. Dies geschieht erfindungsgemäß nachdem das Transportpaar für die Übergabe des vorbehandelten Bauteils an die Einbrennstufe getrennt und damit das Fördergestell für die erneute Aufnahme eines vorzubehandelnden Bauteils freigeben ist.

Die korrosionsschützende Vorbehandlung von metallischen Bauteilen, insbesondere bestehend aus den Werkstoffen Zink, Eisen, Stahl, verzinktem Stahl und/oder Aluminium, in einer Prozessfolge umfassend eine saure Passivierung auf Basis wasserlöslicher Phosphate gefolgt von einer Tauchlackierung ist im Stand der Technik seit Jahrzehnten etabliert. Die saure Passivierung kann dabei die Ausbildung einer kristallinen Phosphatschicht entsprechend der EP 2503025 oder lediglich die Ausbildung eines amorphen Phosphat-haltigen Überzuges, beispielsweise im Rahmen einer Zirkonphosphatierung entsprechend der EP 2215285, bewirken. Die derart passivierten metallischen Bauteile werden üblicherweise nach einer Spüle umgehend in die Behandlungsstufe der Tauchlackierung überführt. Die der Passivierung und der nachfolgenden Tauchlackierung zwischengeschaltete Spüle dient allein dem Zweck, die im auf dem Bauteil anhaftende Nassfilm enthaltenden Aktivkomponenten der Passivierung zur Einstellung einer reproduzierbaren Oberfläche zu entfernen, ggf. in die vorherige Behandlungsstufe zu rezyklieren und die Überschleppung derselben in die Tauchlackierung - sogenanntes "Dragover" - zu minimieren. Gerade mit der Überschleppung von Aktivkomponenten aus in der Prozessfolge vorrangigen Behandlungsstufen in die Tauchlackierung sind häufig Probleme verbunden, da über die Stabilität des Tauchbades und dessen Zusammensetzung unmittelbar sowohl die Güte und Reproduzierbarkeit der Tauchlackierung als auch die Prozessführung beim Einbrennen des Lackes nachteilig beeinflusst sein kann. Dies gilt insbesondere für die Überschleppung von gelösten Phosphaten, die in der Tauchlackierung zum einen die Abscheidecharakteristik der dispergierten Lackbestandteile beeinflussen können, insbesondere bei elektrophoretischen Tauchlacken, und zum anderen die Effektivkonzentration essentieller Katalysatoren / Vernetzer auf Basis ausgewählter Schwermetalle für die spätere Aushärtung des Tauchlackes durch Ausfällungsreaktionen herabgesetzt sein kann. Eine Überschleppung von gelösten Phosphaten kann ursächlich für erhöhte Einbrenntemperaturen des Tauchlackes sein. Erhöhte Einbrenntemperaturen bei Überschleppung von gelösten Phosphaten können insbesondere für Tauchlacke beobachtet werden, die neben dem dispergierten Harz wasserslösliche Salze von Yttrium und/oder Bismut enthalten. Obwohl die Überschleppung von gelösten Phosphaten in derartigen Vorbehandlungslinien durch ein Kaskade von Zwischenspülen gut kontrolliert werden kann, ist das Phänomen der Überschleppung bei solchen Anlagentypen bisher nicht vollständig eliminierbar, bei denen die vorzubehandelnden Bauteil mittels Fördergestell durch sämtliche Behandlungsstufen einer zuvor beschriebenen Vorbehandlungslinie geführt werden, ehe das nasschemisch vorbehandelte Bauteil vom Fördergestell getrennt und für die Einbrennstufe, die das Trocknen, Verfilmen und Aushärten des Tauchlackes vorsieht, bereitgestellt wird, während das freigegebene Fördergestell ein weiteres vorzubehandelndes Bauteil aufnimmt, um es erneut durch sämtliche Behandlungsstufen zu führen. Dieser Vorgang wird im quasikontinuierlichen Betrieb einer Vorbehandlungslinie so oft wiederholt, bis eine Wartung der Fördergestelle zu erfolgen hat und diese vom anhaftenden Lackkoagulat mechanisch befreit werden, ehe sie wieder zur Aufnahme der vorzubehandelnden Bauteile eingesetzt werden können. In derartigen Anlagen, wie sie auch in der EP 0 376 222 A1 beschrieben ist, zeigt sich, dass im Wartungsintervall der Fördergestelle die Überschleppung von gelösten Phosphaten nahezu stetig ansteigt und so Nachteile durch höhere Einbrenntemperaturen des Tauchlackes trotz vorhandener Zwischenspülen auf Kosten der Wirtschaftlichkeit einer solchen Vorbehandlungslinie nur über sehr kurze Wartungsintervalle der Fördergestelle überwunden werden können. In der EP 0 376 222 A1 wird das nach der Tauchlackierung freigegebene Fördergestell mit Spülwasser nachgespült. Die Aufgabe der vorliegenden Erfindung besteht daher darin, die Wirtschaftlichkeit eines solchen Verfahrens zur korrosionsschützenden Vorbehandlung von Bauteilen in Serie zu verbessern.

Diese Aufgabe wird gelöst in einem Verfahren zur korrosionsschützenden Vorbehandlung einer Vielzahl von metallischen Bauteilen in Serie umfassend zumindest eine saure Passivierung auf Basis einer gelöste Phosphate enthaltenden wässrigen Behandlungslösung und eine Tauchlackierung jeweils als nasschemische Behandlungsstufen, wobei die Behandlungsstufe der Tauchlackierung stets derjenigen der sauren Passivierung in der Prozessfolge zur korrosionsschützenden Vorbehandlung nachfolgt, bei dem jedes vorzubehandelnde Bauteil der Serie von einem Fördergestell aufgenommen, sodann das Transportpaar bestehend aus Bauteil und Fördergestell durch die nasschemischen Behandlungsstufen entsprechend der Prozessfolge geführt und das Transportpaar erst nach der letzten Behandlungsstufe voneinander getrennt und ein vorbehandeltes Bauteil ausgeschleust wird, und anschließend das auf diese Weise freigegebene Fördergestell ein nächstes vorzubehandelndes Bauteil der Serie aufnimmt, um die Prozessfolge zum Zwecke der korrosionsschützenden Vorbehandlung dieses Bauteils erneut zu durchlaufen, wobei das Fördergestell die Prozessfolge so oft durchläuft, wie es erforderlich ist, die Vielzahl der Bauteile korrosionsschützend vorzubehandeln, und wobei zumindest ein Teil eines jeden Fördergestelles in den nasschemischen Behandlungsstufen sowohl mit der sauren Passivierung als auch der Tauchlackierung in Kontakt gebracht wird, dadurch gekennzeichnet, dass mindestens der Teil eines jeden nach der letzten Behandlungsstufe freigegebenen Fördergestells vor der Aufnahme eines nächsten vorzubehandelnden Bauteils zur Konditionierung mit einem sauren wässrigen Mittel enthaltend wasserlösliche Verbindungen der Elemente Eisen, Aluminium, Kalzium, Magnesium, Zink, Chrom(III), Titan und/oder Zirkonium in einer Gesamtmenge von mindestens 0,1 g/kg, jedoch weniger als 100 mg/kg an gelösten Phosphaten berechnet als PO₄, jeweils bezogen auf das Mittel in Kontakt gebracht wird, der zuvor in der sauren Passivierung mit der wässrigen Behandlungslösung enthaltend gelöste Phosphate in Kontakt gebracht worden war.

In einem solchen erfindungsgemäßen Verfahren werden die metallischen Bauteile korrosionsschützend vorbehandelt, während die Überschleppung von gelöstem Phosphat aus der sauren Passivierung in die Tauchlackierung über die Fördergestelle effektiv unterdrückt wird. Da die Tauchlackierung je Fördergestell im erfindungsgemäßen Verfahren wiederholt durchfahren wird, baut sich auf den Bereichen des Fördergestells, die wiederholt in Kontakt mit dem Tauchlack treten, ohne nachfolgend eingebrannt zu werden, ein Lackkoagulat in beträchtlicher Schichtdicke auf. Im erfindungsgemäßen Verfahren wird die Aufnahmekapazität des anhaftenden Lackkoagulats für gelöstes Phosphat jedoch minimiert, indem die Fördergestelle als solche nach der Übergabe des nasschemisch vorbehandelten Bauteile, die mit einen noch nicht eingebrannten Tauchlack beschichtet sind, und bevor ein neues vorzubehandelndes Bauteil aufgenommen wird, zur Konditionierung mit dem sauren wässrigen Mittel behandelt werden. Hierdurch wird überraschenderweise bewirkt, dass das an den Fördergestell anhaftende Lackkoagulat die Aktivkomponenten aufnimmt und in der sauren Passivierung der nachfolgenden Prozessfolge zur korrosionsschützenden Vorbehandlung eines nächsten Bauteils eine Immobilisierung des aufgenommenen gelösten Phosphates im am Fördergestell anhaftenden Lackkoagulat resultiert. Das derart immobilisierte Phosphat wird in der nachfolgenden Tauchlackierung nicht freigesetzt. Damit wird die aufgrund der Fördergestelle üblicherweise hervorgerufene Überschleppung von gelösten Phosphaten erheblich reduziert, so dass Qualität und Güte der Tauchlackierung im Verlauf der Vorbehandlung von Bauteilen in Serie keine Verschlechterung erfahren und/oder die Einbrenntemperatur des Lackes aufgrund der Präzipitation von Vernetzungskatalysatoren wie Yttrium und/oder Bismut nicht erhöht werden muss.

Eine Vorbehandlung in Serie gemäß der vorliegenden Erfindung liegt vor, wenn eine Vielzahl von metallischen Bauteilen die nasschemischen Behandlungsstufen der Prozessfolge zur korrosionsschützenden Vorbehandlung durchläuft, wobei jedes Bauteil die einzelnen Behandlungsstufen der Prozessfolge zeitlich voneinander versetzt durchläuft

Ein metallisches Bauteil im Sinne der vorliegenden Erfindung liegt vor, wenn das Bauteil zumindest teilweise zusammengesetzt ist aus mindestens einem metallischen Werkstoff, vorzugsweise aus Zink, Eisen, Aluminium sowie aus den jeweiligen Legierungen, insofern die vorgenannten Elemente jeweils den Hauptlegierungsbestandteil mit mehr als 50 at.-% bilden, sowie aus verzinktem Stahl.

Eine saure Passivierung im Sinne der vorliegenden Erfindung kennzeichnet eine nasschemische Behandlungsstufe, in deren Verlauf ein passivierender Überzug enthaltend Phosphat gebildet wird. Zu diesem Zweck beruht die saure Passivierung auf einem wässrigen Mittel mit einem pH-Wert unterhalb von 7 enthaltend gelöstes Phosphat, wobei gelöstes Phosphat in Wasser in Form von hydratisierten Verbindungen vorliegt, die eine Quelle für Phosphat-Ionen darstellen.

Eine Tauchlackierung im Sinne der vorliegenden Erfindung kennzeichnet eine nasschemische Behandlungsstufe, in deren Verlauf ein aushärtbares Lackkoagulat auf dem metallischen Bauteil abgeschieden wird, das in einer nachfolgenden Behandlungsstufe durch Einbrennen verfilmt und ausgehärtet wird. Zu diesem Zweck beruht die Tauchlackierung auf einem wässrigen Mittel enthaltend zumindest ein dispergiertes organisches Harz in einer Menge von zumindest 1 Gew.-% bezogen auf das wässrige Mittel. In einer bevorzugten Ausführungsform ist der Tauchlack elektrophoretisch abscheidbar, in einer besonders bevorzugten Ausführungsform durch Anlegen eines Stromes, bei dem das metallische Bauteil als Kathode geschaltet ist. In letzterem Fall handelt es sich um eine kathodische Tauchlackierung, bei der eine alkalische pH-Verschiebung an der Grenzfläche zum metallischen Bauteil die Koagulation der dispergierten Harz-Partikel und so die Schichtbildung auf dem Bauteil herbeiführt. Es hat sich herausgestellt, dass insbesondere das Lackkoagulat von kathodischen Tauchlacken die Aufnahme von gelöstem Phosphat begünstigt. Möglicherweise ist hier das positive Zeta-Potential der Harz-Partikel bzw. die positive Ladungsdichte im Polymer verantwortlich für die vergleichsweise hohe Aufnahmekapazität und die damit verstärkte Tendenz gelöstes Phosphat in die Tauchlackierung über das dem Fördergestell anhaftende Lackkoagulat zu überschleppen.

In einer besonderen Ausführungsform des erfindungsgemäßen Verfahrens stellt die bevorzugte Tauchlackierung eine kathodische Tauchlackierung dar, wobei neben dem dispergierten Harz vorzugsweise zumindest eine wasserlösliche Verbindung des Elements Bismut und/oder Yttrium enthalten ist. Gerade diese Elemente neigen dazu in Gegenwart von gelöstem Phosphat, schwerlösliche Salze zu bilden, so dass das Ergebnis einer derartigen Tauchlackierung in besonderem Maße von der Überschleppung gelöster Phosphate abhängig ist.

Eine Prozessfolge zur korrosionsschützenden Vorbehandlung umfasst im Sinne der vorliegenden Erfindung eine vorgegebene Abfolge nasschemischer Behandlungsstufen von der Aufnahme des vorzubehandelnden Bauteils durch das Fördergestell bis zur Entnahme des nunmehr vorbehandelten Bauteils zum Zwecke der Übergabe an die Einbrennstufe, wobei jede einzelne nasschemische Behandlungsstufe ein In-Kontakt-Bringen des Bauteils und zumindest Teile des Fördergestelles mit einem wässrigen Mittel vorsieht.

Ein Fördergestell im Sinne der vorliegenden Erfindung kennzeichnet ein Gestell zum Transport der Bauteile durch sämtliche räumlich voneinander getrennte nasschemische Behandlungsstufen entsprechend der erfindungsgemäßen Prozessfolge. Das Gestell kann jede beliebige räumliche Ausgestaltung annehmen, die es erlaubt das Bauteil aufzunehmen und zu transportieren. Fördergestell und vorzubehandelndes Bauteil bilden für die Dauer der Prozessfolge ein Transportpaar. Ist die Prozessfolge beendet, wird das vorbehandelte Bauteil entnommen und für die Einbrennstufe bereitgestellt ("Ausschleusen"); das Fördergestell ist, sobald das vorbehandelte Bauteil entnommen wurde, wieder freigegeben und kann ein weiteres vorzubehandelndes Bauteil aufnehmen. Üblicherweise ist es aus Gründen der Verfahrensökonomie bevorzugt, wenn zur quasikontinuierlichen Behandlung einer Vielzahl von Bauteilen in Serie auch eine Vielzahl von Fördergestellen eingesetzt wird, vorzugsweise entspricht die Anzahl der Fördergestelle mindestens der Anzahl an nasschemischen Behandlungsstufen.

In einer bevorzugten Ausgestaltung des erfindungsgemäßen Verfahrens enthält das saure wässrige Mittel zur Konditionierung eines freigegebenen Fördergestells zumindest wasserlösliche Verbindungen der Elemente Eisen und/oder Aluminium, vorzugsweise des Elements Eisen, insbesondere bevorzugt wasserlösliche Eisen(III)-Verbindungen, wobei die Menge an Eisen und/oder Aluminium vorzugsweise jeweils mindestens 0,1 g/kg bezogen auf das Mittel beträgt.

Bevorzugt ist erfindungsgemäß zudem, dass das saure wässrige Mittel zur Konditionierung zumindest wasserlösliche Verbindungen des Elements Eisen enthält und der pH-Wert des Mittels nicht größer als 3,0 ist.

Verbindungen sind im Sinne der vorliegenden Erfindung "wasserlöslich", wenn ihre Löslichkeit in entionisiertem Wasser mit einer Leitfähigkeit von nicht mehr als 1 µScm⁻¹ bei einer Temperatur von 20 °C zumindest 1 g/l beträgt.

Das saure wässrige Mittel zur Konditionierung ist im Wesentlichen frei von gelösten Phosphaten. Dies soll bedeuten, dass weniger als 100 mg/kg, bevorzugt weniger als 50 ppm, an gelösten Phosphaten berechnet als PO₄ im Mittel enthalten sind.

Weiterhin ist bevorzugt, um die Wirkung der gesonderten Behandlung des Fördergestell für Unterdrückung der Überschleppung von gelösten Phosphat zu konservieren, dass der Behandlungsstufe der sauren Passivierung eine solche Reinigung/Entfettung als nasschemische Behandlungsstufe innerhalb der Prozessfolge zur korrosionsschützenden Vorbehandlung von Bauteilen in Serie vorausgeht, bei der das Reinigen und Entfetten auf Basis wässriger Reinigungslösungen erfolgt, deren pH Wert oberhalb von 6, vorzugsweise oberhalb von 8, insbesondere bevorzugt oberhalb von 10 liegt. Dann ist gewährleistet, dass das dem Fördergestell anhaftende Lackkoagulat und darin aufgenommene Aktivkomponenten aus der Behandlung des Fördergestells im Lackkoagulat verbleiben und nicht in die Reinigung/Entfettung abgegeben werden.

Außerdem ist es üblich und daher bevorzugt, wenn sich im erfindungsgemäßen Verfahren der Prozessfolge zur korrosionsschützenden Vorbehandlung einer Vielzahl von Bauteilen in Serie das Einbrennen des Tauchlackes zur Ausbildung einer ausgehärteten Lackierung anschließt, wobei vorzugsweise wiederum Fördergestelle, die jedoch keine solchen Fördergestelle sind, die der Prozessfolge der korrosionsschützenden Vorbehandlung zugehören, die vorbehandelten Bauteile aufnehmen und in die Einbrennstufe und ggf. nachfolgende Stufen zur weiteren Beschichtung überführen.

## Patentansprüche

1. Verfahren zur korrosionsschützenden Vorbehandlung einer Vielzahl von metallischen Bauteilen in Serie umfassend zumindest eine saure Passivierung auf Basis einer gelöste Phosphate enthaltenden wässrigen Behandlungslösung und eine Tauchlackierung jeweils als nasschemische Behandlungsstufen, wobei die Behandlungsstufe der Tauchlackierung stets derjenigen der sauren Passivierung in der Prozessfolge zur korrosionsschützenden Vorbehandlung nachfolgt, bei dem jedes vorzubehandelnde Bauteil der Serie von einem Fördergestell aufgenommen, sodann das Transportpaar bestehend aus Bauteil und Fördergestell durch die nasschemischen Behandlungsstufen entsprechend der Prozessfolge geführt und das Transportpaar erst nach der letzten Behandlungsstufe voneinander getrennt und ein vorbehandeltes Bauteil ausgeschleust wird, und anschließend das auf diese Weise freigegebene Fördergestell ein nächstes vorzubehandelndes Bauteil der Serie aufnimmt, um die Prozessfolge zum Zwecke der korrosionsschützenden Vorbehandlung dieses Bauteils erneut zu durchlaufen, wobei das Fördergestell die Prozessfolge so oft durchläuft, wie es erforderlich ist, die Vielzahl der Bauteile korrosionsschützend vorzubehandeln, und wobei zumindest ein Teil eines jeden Fördergestelles in den nasschemischen Behandlungsstufen sowohl mit der sauren Passivierung als auch der Tauchlackierung in Kontakt gebracht wird, **dadurch gekennzeichnet, dass** mindestens der Teil eines jeden nach der letzten Behandlungsstufe freigegebenen Fördergestells vor der Aufnahme eines nächsten vorzubehandelnden Bauteils zur Konditionierung mit einem sauren wässrigen Mittel enthaltend wasserlösliche Verbindungen der Elemente Eisen, Aluminium, Kalzium, Magnesium, Zink, Chrom(III), Titan und/oder Zirkonium in einer Gesamtmenge von mindestens 0,1 g/kg, jedoch weniger als 100 mg/kg an gelösten Phosphaten berechnet als PO₄, jeweils bezogen auf das Mittel in Kontakt gebracht wird, der zuvor in der sauren Passivierung mit der wässrigen Behandlungslösung enthaltend gelöste Phosphate in Kontakt gebracht worden war.

2. Verfahren nach Anspruch 1, **dadurch gekennzeichnet, dass** der Behandlungsstufe der sauren Passivierung eine Reinigung/Entfettung als nasschemische Behandlungsstufe innerhalb der Prozessfolge zur korrosionsschützenden Vorbehandlung von Bauteilen in Serie vorausgeht, wobei die Reinigung/Entfettung auf Basis einer wässrigen Reinigungslösung erfolgt, deren pH Wert oberhalb von 6, vorzugsweise oberhalb von 8, insbesondere bevorzugt oberhalb von 10 liegt.

3. Verfahren nach einem oder beiden der vorherigen Ansprüche, **dadurch gekennzeichnet, dass** das saure wässrige Mittel zur Konditionierung zumindest wasserlösliche Verbindungen der Elemente Eisen und/oder Aluminium, vorzugsweise des Elements Eisen, enthält, wobei die Menge an Eisen und/oder Aluminium vorzugsweise jeweils mindestens 0,1 g/kg bezogen auf das Mittel beträgt.

4. Verfahren nach einem oder mehreren der vorherigen Ansprüche, **dadurch gekennzeichnet, dass** das saure wässrige Mittel zur Konditionierung zumindest wasserlösliche Verbindungen des Elements Eisen enthält und der pH-Wert des Mittels nicht größer als 3,0 ist.

5. Verfahren nach einem oder mehreren der vorherigen Ansprüche, **dadurch gekennzeichnet, dass** die Tauchlackierung eine kathodische Tauchlackierung darstellt, die vorzugsweise neben dem dispergierten Harz zumindest eine wasserlösliche Verbindung des Elements Bismut und/oder Yttrium enthält.

6. Verfahren nach einem oder mehreren der vorherigen Ansprüche, **dadurch gekennzeichnet, dass** sich der Prozessfolge zur korrosionsschützenden Vorbehandlung einer Vielzahl von Bauteilen in Serie das Einbrennen des Tauchlackes zur Ausbildung einer ausgehärteten Lackierung anschließt, wobei vorzugsweise wiederum Fördergestelle, die jedoch keine solchen Fördergestelle sind, die der Prozessfolge der korrosionsschützenden Vorbehandlung zugehören, die vorbehandelten Bauteile aufnehmen und in die Einbrennstufe und ggf. nachfolgende Stufen zur weiteren Beschichtung überführen.

## Claims

1. A method for anti-corrosion pretreatment of a large number of metal components in series, which method comprises at least acid passivation based on an aqueous treatment solution containing dissolved phosphates and dip coating as wet-chemical treatment steps in each case, the treatment step of dip coating always following that of acid passivation in the process sequence for anti-corrosion pretreatment, in which each component in the series to be pretreated is received by a conveying frame, and then the transport pair consisting of the component and the conveying frame is guided through the wet-chemical treatment steps according to the process sequence and the transport pair is separated only after the last treatment step and a pretreated component is extracted, and then the conveying frame which is released in this way receives a next component in the series to be pretreated in order to repeat the process sequence for the purpose of anti-corrosion pretreatment of said component, the conveying frame going through the process sequence as often as is necessary to carry out anti-corrosion pretreatment of the large number of components, and at least part of each conveying frame being brought into contact both with the acid passivation and dip coating in the wet-chemical treatment steps, **characterized in that**, before receiving a next component to be pretreated, at least the part of each conveying frame which is released after the last treatment step is brought into contact, for conditioning, with an acidic aqueous agent containing water-soluble compounds of the elements iron, aluminum, calcium, magnesium, zinc, chromium(III), titanium and/or zirconium in a total amount of at least 0.1 g/kg, but less than 100 mg/kg of dissolved phosphates calculated as PO₄, in each case based on the agent, which part had previously been brought into contact with the aqueous treatment solution containing dissolved phosphates during the acid passivation.

2. The method according to claim 1, **characterized in that** the treatment step of acid passivation is preceded by cleaning/degreasing as a wet-chemical treatment step within the process sequence for anti-corrosion pretreatment of components in series, the cleaning/degreasing being carried out based on an aqueous cleaning solution, the pH value of which is above 6, preferably above 8, particularly preferably above 10.

3. The method according to one or both of the preceding claims, **characterized in that** the acidic aqueous conditioning agent contains at least water-soluble compounds of the elements iron and/or aluminum, preferably of the element iron, the amount of iron and/or aluminum in each case preferably being at least 0.1 g/kg, based on the agent.

4. The method according to one or more of the preceding claims, **characterized in that** the acidic aqueous conditioning agent contains at least water-soluble compounds of the element iron and the pH value of the agent is no more than 3.0.

5. The method according to one or more of the preceding claims, **characterized in that** the dip coating is cathodic dip coating which preferably contains at least one water-soluble compound of the element bismuth and/or yttrium in addition to the dispersed resin.

6. The method according to one or more of the preceding claims, **characterized in that** baking the dipping paint in order to form a hardened paint coating follows on from the process sequence for anti-corrosion pretreatment of a large number of components in series, with conveying frames, which are not conveying frames of the kind associated with the process sequence for anti-corrosion pretreatment, preferably in turn receiving the pretreated components and transferring said components to the baking step and optionally subsequent steps for further coating.

## Revendications

1. Procédé destiné au prétraitement anti-corrosion d'une pluralité de composants métalliques en série, comprenant au moins une passivation acide à base d'une solution de traitement aqueuse contenant des phosphates dissous et un laquage par immersion respectivement en tant qu'étapes de traitement chimique par voie humide, l'étape de traitement du laquage par immersion suivant toujours celle de la passivation acide dans la séquence de processus destinée au prétraitement anti-corrosion, selon lequel chaque composant à prétraiter de la série est reçu par un châssis de convoyeur, puis la paire de transport composée du composant et du châssis de convoyeur est guidée à travers les étapes de traitement chimique par voie humide selon la séquence de processus et les éléments de la paire de transport ne sont séparés l'un de l'autre qu'après la dernière étape de traitement et un composant prétraité est évacué, après quoi le châssis de convoyeur ainsi libéré reçoit un composant suivant de la série à prétraiter afin de réaliser de nouveau la séquence de processus en vue du prétraitement anti-corrosion de ce composant, le châssis de convoyeur réalisant la séquence de processus aussi souvent que nécessaire pour prétraiter la pluralité des composants de manière à les protéger contre la corrosion, et au moins une partie de chaque châssis de convoyeur étant mise en contact aussi bien avec la passivation acide qu'avec le laquage par immersion dans les étapes de traitement chimique par voie humide, **caractérisé en ce qu'**au moins la partie de chaque châssis de convoyeur libéré après la dernière étape de traitement, laquelle partie a été précédemment mise en contact avec la solution de traitement aqueuse contenant des phosphates dissous dans la passivation acide, est mise en contact, avant la réception d'un composant à prétraiter suivant destiné au conditionnement, avec un agent aqueux acide contenant des composés hydrosolubles des éléments fer, aluminium, calcium, magnésium, zinc, chrome (III), titane et/ou zirconium dans une quantité totale d'au moins 0,1 g/kg, mais inférieure à 100 mg/kg, de phosphates dissous mesurés en tant que PO₄, à chaque fois par rapport à l'agent.

2. Procédé selon la revendication 1, **caractérisé en ce que** l'étape de traitement de la passivation acide est précédée d'un nettoyage/dégraissage en tant qu'étape de traitement chimique par voie humide au sein de la séquence de processus destinée au prétraitement anti-corrosion de composants en série, le nettoyage/dégraissage étant effectué à base d'une solution nettoyante aqueuse, dont le pH est supérieur à 6, de préférence supérieur à 8, de manière particulièrement préférée supérieur à 10.

3. Procédé selon l'une ou les deux des revendications précédentes, **caractérisé en ce que** l'agent aqueux acide destiné au conditionnement contient au moins des composés hydrosolubles des éléments fer et/ou aluminium, de préférence de l'élément fer, la quantité de fer et/ou d'aluminium par rapport à l'agent étant de préférence respectivement d'au moins 0,1 g/kg.

4. Procédé selon l'une ou plusieurs des revendications précédentes, **caractérisé en ce que** l'agent aqueux acide destiné au conditionnement contient au moins des composés hydrosolubles de l'élément fer, et le pH de l'agent n'est pas supérieur à 3,0.

5. Procédé selon l'une ou plusieurs des revendications précédentes, **caractérisé en ce que** le laquage par immersion est un laquage par immersion cathodique qui contient de préférence au moins un composé hydrosoluble de l'élément bismuth et/ou yttrium en plus de la résine dispersée.

6. Procédé selon l'une ou plusieurs des revendications précédentes, **caractérisé en ce que** la séquence de traitement destinée au prétraitement anti-corrosion d'une pluralité de composants en série est suivie par la cuisson de la laque d'immersion pour former un laquage durci, des châssis de convoyeur, qui ne sont pas des châssis de convoyeur appartenant à la séquence de processus du prétraitement anti-corrosion, recevant de préférence encore les composants prétraités et transférant ces derniers vers l'étape de cuisson et, éventuellement, vers des étapes ultérieures destinées à un revêtement supplémentaire.
